(19) Europäisches Patentamt
European Patent Office
Office européen des brevets

(11) **EP 4 438 759 B1**

(12) **EUROPEAN PATENT SPECIFICATION**

(45) Date of publication and mention
of the grant of the patent:
**29.04.2026   Bulletin 2026/18**

(21) Application number: **23740069.2**

(22) Date of filing: **12.01.2023**

(51) International Patent Classification (IPC):
*C22C 38/00* (2006.01)      *C22C 38/02* (2006.01)
*C22C 38/04* (2006.01)      *C22C 38/06* (2006.01)
*C22C 38/16* (2006.01)      *C21D 1/26* (2006.01)
*C21D 1/28* (2006.01)      *C21D 1/74* (2006.01)
*C21D 3/04* (2006.01)      *C21D 8/12* (2026.01)
*C21D 9/46* (2006.01)

(52) Cooperative Patent Classification (CPC):
C21D 1/74; C21D 1/26; C21D 1/28; C21D 3/04;
C21D 8/1222; C21D 8/1233; C21D 8/1244;
C21D 8/1255; C21D 8/1261; C21D 8/1272;
C21D 8/1283; C21D 9/46; C22C 38/001;
C22C 38/008; C22C 38/02;              (Cont.)

(86) International application number:
**PCT/CN2023/071915**

(87) International publication number:
**WO 2023/134728 (20.07.2023 Gazette 2023/29)**

(54) **COPPER-CONTAINING ORIENTED SILICON STEEL AND MANUFACTURING METHOD THEREFOR**

KUPFERHALTIGER ORIENTIERTER SILICIUMSTAHL UND HERSTELLUNGSVERFAHREN DAFÜR

ACIER AU SILICIUM ORIENTÉ CONTENANT DU CUIVRE ET PROCÉDÉ DE FABRICATION ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **12.01.2022   CN 202210030972**

(43) Date of publication of application:
**02.10.2024   Bulletin 2024/40**

(73) Proprietor: **BAOSHAN IRON & STEEL CO., LTD.**
**Shanghai 201900 (CN)**

(72) Inventors:
 • **MA, Changsong**
   **Shanghai 201900 (CN)**
 • **ZHANG, Huabing**
   **Shanghai 201900 (CN)**
 • **MU, Huaichen**
   **Shanghai 201900 (CN)**
 • **CHEN, Jianbing**
   **Shanghai 201900 (CN)**
 • **ZHAO, Bin**
   **Shanghai 201900 (CN)**
 • **ZHAO, Zipeng**
   **Shanghai 201900 (CN)**
 • **WU, Meihong**
   **Shanghai 201900 (CN)**
 • **HU, Zhuochao**
   **Shanghai 201900 (CN)**
 • **YANG, Yongjie**
   **Shanghai 201900 (CN)**
 • **LI, Guobao**
   **Shanghai 201900 (CN)**

(74) Representative: **Maiwald GmbH**
   **Elisenhof**
   **Elisenstraße 3**
   **80335 München (DE)**

(56) References cited:
EP-A1- 2 390 373    CN-A- 1 796 587
CN-A- 101 768 697    CN-A- 103 774 042
CN-A- 103 834 908    CN-A- 110 055 393
CN-A- 110 055 393    JP-A- 2005 226 111

(52) Cooperative Patent Classification (CPC): (Cont.)
**C22C 38/04; C22C 38/06; C22C 38/16;** Y02P 10/20

**Description**

**TECHNICAL FIELD**

The present disclosure relates to a metallic material and a manufacturing method therefor, in particular to an oriented silicon steel and a manufacturing method therefor.

**BACKGROUND**

In recent years, under the background of energy conservation and emission reduction, in many fields such as ultra-high voltage (UHV) projects, high-speed rails and rail transit, subway construction, photovoltaic power generation, real estate, and new energy vehicle charging piles, the demand for oriented electrical steels with higher magnetic induction and thinner gauge has greatly increased. Based on this demand, oriented silicon steels are developing towards low cost, low iron loss and environmental friendliness.

In the prior art, traditional manufacturing methods for oriented silicon steel can be divided into two manufacturing processes based on the heating temperature of hot rolling. One is high-temperature process, in which the heating temperature of slab is between 1250 °C and 1320 °C, and inhibitors of AlN and Cu are used. The other is low-temperature process, in which the heating temperature of slab is between 1100 °C and 1250 °C, and inhibitors such as AlN and CuS are used, and which requires nitriding after decarburization to form acquired inhibitors to obtain inhibition ability. Low-temperature process is known as the current mainstream process for producing oriented silicon steel due to its advantages such as low energy consumption and high yield.

In recent years, in order to improve the magnetic properties of oriented silicon steel products, various technical means have been adopted to optimize the design. For example, the Chinese application with the publication number of CN103834908A and the publication date of June 4, 2014, entitled "Production Method for Improving Electromagnetic Properties of Oriented Silicon Steel", discloses a production method for improving the electromagnetic properties of oriented silicon steel. The disclosure controls the amount of nitrogen infiltrated according to the proportion of AlN precipitates of 30-100 nm in the normalized steel plate to obtain high-magnetic-induction oriented silicon steel. However, this disclosure is mainly aimed at AlN-based inhibitor component system.

For another example, the Chinese application with the publication number of CN110055393A and the publication date of July 26, 2019, entitled "Production Method for Thin-gauge Oriented Silicon Steel Strip with High Magnetic Induction at Low Temperature" discloses a production method for thin-gauge oriented silicon steel strip with high magnetic induction at low temperature. The disclosure adjusts the soaking temperature for decarburization annealing and the nitriding process according to the changes of raw material composition and the final rolling temperature of hot rolling, so as to optimize the properties of thin-gauge oriented silicon steel. However, in this technical solution, both on-site decarburization and nitriding are performed on the production line of decarburization annealing unit, requiring simultaneous adjustment of the temperatures of decarburization and nitriding, which poses significant difficulties in on-site control.

For another example, the Chinese application with the publication number of CN112522609A and the publication date of March 19, 2021, entitled "High-magnetic-induction Oriented Silicon Steel Containing Composite Inhibitor, and Production Method Therefor" discloses that the primary grain size can be effectively prevented from becoming excessively large by the addition of Cu, and $MgSO_4$ added to the magnesium oxide additive can form an acquired inhibitor with Cu to form a double inhibitor system, so as to avoid the generation of a large amount of $N_2$ during high temperature annealing, while ensuring the stability of magnetic properties. However, since this technical solution adds an inhibitor to magnesium oxide, there is still a problem in that the inhibitor distribution is not uniform.

In the prior art, the addition of alloying elements is the most common method to improve the magnetic properties of oriented silicon steel products. As disclosed on page 491 and page 505 of "Principles of Materials Science of Electrical Steel" (Higher Education Press), the addition of 0.45% Cu can reduce the heating temperature to 1250-1280 °C, but the magnetic property of steel products is not higher than 1.88 T, and the content of Cu added in the above low-temperature processes is generally controlled to be 0.01-0.1%. Therefore, how to improve the magnetic properties of copper-containing oriented silicon steel is still a technical problem to be solved urgently.

**SUMMARY**

An object of the present disclosure is to provide a copper-containing oriented silicon steel having an iron loss $P_{17/50}$ of less than 0.85 W/Kg and a magnetic induction $B_8$ of greater than 1.90 T, which is excellent in magnetic properties and has good popularization prospects and application values.

In order to achieve the above object, the present disclosure provides a copper-containing oriented silicon steel, which comprises the following chemical elements in percentage by mass:

0.04-0.09% of C, 2.9-4.0% of Si, 0.05-0.2% of Mn, 0.005-0.01% of S, 0.015-0.035% of soluble aluminum (Als), 0.0010-0.01% of N, 0.01-0.1% of Sn, and Cu, with the balance being Fe and inevitable impurities; wherein the content of Cu satisfies: $3\% \leq Si+Cu \leq 4.4\%$, $0.05 \leq Cu/Si \leq 0.13$ and $24 \leq (Mn+Cu)/S \leq 118$,

wherein the copper-containing oriented silicon steel has an average grain size of secondary recrystallisation of 10-20 mm, and an average grain size deviation of less than 5 mm, wherein the average grain size and average grain size deviation of secondary recrystallisation are measured according to GB/T 6394-2017 as defined herein below.

In the copper-containing oriented silicon steel according to the present disclosure, the design principle of each chemical element is as follows.

C: C can form $\gamma$ phase during hot rolling. However, when the content of C in the steel is lower than 0.04%, effective $\gamma$ phase cannot be formed; when the content of C in the steel exceeds 0.09%, decarburization will be difficult. Therefore, in the copper-containing oriented silicon steel according to the present disclosure, the mass percentage of C is controlled to be between 0.04% and 0.09%.

Si: Si element can effectively increase the resistivity of the material and reduce the iron loss of the steel. However, the higher the content of Si in the steel, the worse the manufacturability. When the content of Si in the steel is higher than 4.0%, the strip breaking rate of cold rolling will increase; when the content of Si in the steel is lower than 2.9%, the effects of effectively reducing the iron loss and improving the properties cannot be achieved. Therefore, in the copper-containing oriented silicon steel according to the present disclosure, the mass percentage of Si is controlled to be between 2.9% and 4.0%, preferably between 3.1% and 3.5%.

Mn: The effect of Mn is similar to that of Si. Mn can also improve the resistivity of materials and reduce the iron loss of the steel. In addition, Mn can also combine with S to form MnS as an inhibitor. When the content of Mn in the steel is lower than 0.05%, the above effect cannot be achieved. However, when the content of Mn in the steel is higher than 0.2%, MnS formed is coarse, which will lead to the decrease of hot rolling workability and magnetic properties of the steel. Therefore, in the copper-containing oriented silicon steel according to the present disclosure, the mass percentage of Mn is controlled to be between 0.05% and 0.2%, preferably between 0.065% and 0.15%.

S: S mainly combines with Mn, Cu and the like to form MnS or CuS as an inhibitor. When the content of S in the steel is lower than 0.005%, the above effect cannot be effectively achieved. When the content of S in the steel is higher than 0.01%, difficulty in purification and desulfurization will be caused. Therefore, in the copper-containing oriented silicon steel according to the present disclosure, the mass percentage of S is controlled to be between 0.005% and 0.01%.

Soluble aluminum (Als): Als mainly forms an AlN inhibitor with N. When the content of Als in the steel is higher than 0.035%, the quality of the underlayer will deteriorate. When the content of Als in the steel is lower than 0.015%, the effect of inhibitors cannot be achieved. Therefore, in the copper-containing oriented silicon steel according to the present disclosure, the content of Als is controlled to be between 0.015% and 0.035%.

N: N can form an AlN inhibitor with Als. If the content of N in the steel is lower than 0.0010%, the inhibitor is insufficient. When the content of N in the steel is higher than 0.01%, molten steel tends to swelling during casting of steelmaking, and the product may exhibit flaws of skinning and blistering. Therefore, in the copper-containing oriented silicon steel according to the present disclosure, the content of N is controlled to be between 0.0010% and 0.01%.

Sn: Sn belongs to a grain boundary segregation element, and can play a role in segregating and inhibiting, thus further increasing the inhibition ability. However, it should be noted that when the content of Sn in the steel exceeds 0.1%, the control of the underlayer becomes difficult, and when the content of Sn in the steel is lower than 0.01%, the effects of segregating and inhibiting cannot be achieved. Therefore, in the copper-containing oriented silicon steel according to the present disclosure, the content of Sn is controlled to be between 0.01% and 0.1%, preferably between 0.05% and 0.1%.

Cu: Cu can increase resistivity and reduce iron loss. Meanwhile, Cu, like Si, is an austenite stabilizing element. When the content of Cu in the steel is excessively low, the above-mentioned beneficial effects cannot be achieved. When the content of Cu in the steel is excessively high, similarly to the aforementioned Si, the rolling difficulty will be increased, the rate of strip breakage will be increased, and the control of the underlayer becomes difficult. Therefore, in the copper-containing oriented silicon steel according to the present disclosure, the content of Cu needs to satisfy the following relationship: $3\% \leq Si+Cu \leq 4.4\%$, $0.05 \leq Cu/Si \leq 0.13$ and $24 \leq (Mn+Cu)/S \leq 118$. In this case, Cu and Mn can react with S to generate CuS and MnS, which act as inhibitors. By controlling the content of Cu to satisfy the above specific relationship, the beneficial effect of Cu in improving the magnetic properties of the steel can be fully realized.

Preferably, the content of Cu satisfies $3.3\% \leq Si+Cu \leq 4.1\%$, more preferably $3.8\% \leq Si+Cu \leq 4.1\%$.

Preferably, the content of Cu satisfies $24 \leq (Mn+Cu)/S \leq 111$, more preferably $69 \leq (Mn+Cu)/S \leq 111$.

Preferably, the content of Cu satisfies $0.19\% \leq Cu \leq 0.44\%$, more preferably $0.27\% \leq Cu \leq 0.44\%$.

Preferably, the copper-containing oriented silicon steel according to the present disclosure has a thickness of less than or equal to 0.23 mm.

Preferably, the copper-containing oriented silicon steel according to the present disclosure has an iron loss $P_{17/50}$ of less than 0.85 W/Kg, more preferably 0.78 W/Kg or less, and a magnetic induction $B_8$ of greater than 1.90 T, wherein the magnetic induction $B_8$ and iron loss $P_{17/50}$ are measured according to GB/T13789 as defined herein below.

Preferably, the copper-containing oriented silicon steel according to the present disclosure has an average grain size of secondary recrystallisation of 12-16 mm, and an average grain size deviation of 4 mm or less.

In another aspect, it is also an object of the present disclosure to provide a method for manufacturing the copper-containing oriented silicon steel described above, including the steps of:

(1) smelting and casting molten steel to prepare a slab;
(2) subjecting the slab to hot rolling to prepare a hot-rolled steel plate;
(3) subjecting the steel plate to a two-stage normalizing annealing, wherein a first-stage annealing is performed at a temperature of 1100-1150 °C for 60-120 s, and a second-stage annealing is performed at a temperature of 900-950 °C for 60-120 s, and then water cooling, wherein the cooling speed is controlled to be greater than or equal to 30 °C/s, so that the volume ratio of the combined amount of AlN, CuS and MnS precipitates having a size of 30-100 nm to the total amount of precipitates in the steel plate after normalizing annealing is 30-80%;
(4) cold rolling;
(5) decarburization annealing;
(6) nitriding;
(7) applying a high temperature isolation agent;
(8) high-temperature annealing; and
(9) applying an insulating coating, and hot flattening annealing.

The method according to the present disclosure can be realized by reforming the original production line, is simple and feasible, and can effectively improve the level of magnetic properties of copper-containing oriented silicon steel. The copper-containing oriented silicon steel prepared by the method has an iron loss $P_{17/50}$ of less than 0.85 W/Kg and a magnetic induction $B_8$ of greater than 1.90 T, thus having excellent magnetic properties.

Through a lot of research, the inventors of the present disclosure found that on the basis of reasonable chemical composition design of copper-containing oriented silicon steel, the design of the manufacturing method for the copper-containing oriented silicon steel can be optimized to effectively improve the magnetic properties of copper-containing oriented silicon steel products.

It should be noted that it is very important to control the inhibitors in the production process of copper-containing oriented silicon steels. The research shows that after normalizing annealing, the precipitates less than 30 nm will be dissolved into a solid solution and decompose during subsequent production processes, while the precipitates greater than 100 nm will not function as inhibitors.

In the method according to the present disclosure, by using the two-stage normalizing annealing in step (3) and setting the process parameters of the normalizing annealing within the above ranges, the volume ratio of the combined amount of AlN, CuS and MnS precipitates having a size of 30-100 nm to the total amount of precipitates in the steel plate after normalizing annealing can be controlled to 30-80%. When this volume ratio is lower than 30%, the inhibition ability is insufficient, resulting in poor magnetic properties of the finished product. When the volume ratio is higher than 80%, the inhibition ability is too strong, and it is also difficult to obtain excellent magnetic properties.

Preferably, in step (4) of the method of the present disclosure, the cold rolling reduction rate is 88-92%. Different cold rolling reduction rates result in different dislocation densities, and there will also be differences in stored dislocation energies after cold rolling, so that the driving effect on the primary recrystallisation process will also be different. When the cold rolling reduction rate is lower than 88%, the driving force for primary recrystallisation grain growth is insufficient. When the cold rolling reduction rate is higher than 92%, the driving force for primary recrystallisation grain growth is too strong. In both cases, it is difficult to obtain a good primary recrystallisation grain size.

Preferably, in step (5) of the method according to the present disclosure, the decarburization annealing temperature $T=804.5+56.5\times A+6.2\times B$, wherein A represents the volume ratio of the combined amount of AlN, CuS and MnS precipitates of 30-100 nm to the total amount of precipitates in the steel plate after normalizing annealing, and B represents the cold rolling reduction rate. By setting the decarburization annealing temperature to satisfy the above relationship, the inhibition ability can be satisfied, and a good secondary recrystallisation structure can be obtained.

Preferably, in step (6) of the method according to the present disclosure, the steel has a nitrogen content of 200-300 ppm after nitriding. In this case, the inhibition ability can be satisfied, and a better secondary recrystallisation structure can be obtained.

Preferably, in step (7) of the method according to the present disclosure, the applied high temperature isolation agent is MgO.

Preferably, in step (2) of the method according to the present disclosure, the heating temperature is controlled to be 1050-1150 °C.

Preferably, in step (2) of the method according to the present disclosure, the thickness of the hot rolled steel plate is controlled to be 1.5-2.9 mm.

Preferably, in step (8) of the method of the present disclosure, the temperature is first raised to 500-700 °C and held; then the temperature is continuously raised to 700-1050 °C in an annealing atmosphere of a dry $N_2+H_2$ mixed gas with a volume percentage of 50% or more; then the temperature is continuously raised to 1050-1150 °C in an annealing atmosphere of a dry $N_2+H_2$ mixed gas with a volume percentage of less than 50%; finally, the temperature is continuously raised to 1150-1200 °C in an annealing atmosphere of pure $H_2$.

Preferably, in step (9) of the method according to the present disclosure, the insulating coating may be a conventional insulating coating material for oriented silicon steels, for example, an insulating coating consisting of phosphate, silicon dioxide and chromic anhydride.

Preferably, in step (6) of the method according to the present disclosure, when the temperature is raised to 500-700 °C, the holding time is greater than or equal to 20 h.

Compared with the prior art, the copper-containing oriented silicon steel and the manufacturing method therefor according to the present disclosure have the following advantages and beneficial effects:

Compared with the prior art, the present disclosure obtains a copper-containing oriented silicon steel product with good magnetic properties by reasonably designing the chemical composition of the copper-containing oriented silicon steel and optimizing various process parameters in the manufacturing method, such as controlling the volume ratio of the combined amount of AlN, CuS and MnS precipitates having a size of 30-100 nm to the total amount of precipitates in the normalized steel plate, the cold rolling reduction rate, the decarburization temperature, the nitriding amount and the decarburization annealing. The magnetic properties of the prepared copper-containing oriented silicon steel are improved by at least half a grade.

The manufacturing method for the copper-containing oriented silicon steel according to the present disclosure is simple and feasible. The copper-containing oriented silicon steel prepared by the manufacturing method has an iron loss $P_{17/50}$ of less than 0.85 W/Kg and a magnetic induction $B_8$ of greater than 1.90 T, and has good popularization prospects and application values.

**DETAILED** DESCRIPTION

The copper-containing oriented silicon steel and the manufacturing method therefor according to the present disclosure will be further explained and illustrated below with reference to specific examples. However, the explanations and illustrations do not unduly limit the technical solutions of the present disclosure.

**Examples 1-9 and Comparative Examples** 1-9

Table 1 lists the mass percentage of each chemical element in the copper-containing oriented silicon steels of Examples 1-9 and the oriented silicon steels of Comparative Examples 1-9.

Table 1 (wt%, the balance is Fe and other inevitable impurities)

| No. | Chemical element | | | | | | | | | | |
|---|---|---|---|---|---|---|---|---|---|---|---|
| | C | Si | Mn | S | Als | N | Sn | Cu | Cu/Si | Si+Cu | (Mn+Cu)/S |
| Example 1 | 0.06 | 3.4 | 0.131 | 0.0073 | 0.03 | 0.0067 | 0.01 | 0.44 | 0.13 | 3.8 | 78 |
| Example 2 | 0.06 | 3.4 | 0.082 | 0.0086 | 0.035 | 0.01 | 0.05 | 0.34 | 0.10 | 3.7 | 49 |
| Example 3 | 0.09 | 3.9 | 0.093 | 0.009 | 0.016 | 0.0092 | 0.07 | 0.19 | 0.05 | 4.1 | 31 |
| Example 4 | 0.05 | 3.1 | 0.065 | 0.0057 | 0.024 | 0.0035 | 0.02 | 0.27 | 0.09 | 3.4 | 59 |
| Example 5 | 0.06 | 3.5 | 0.149 | 0.0062 | 0.019 | 0.0018 | 0.09 | 0.22 | 0.06 | 3.7 | 60 |
| Example 6 | 0.04 | 3.2 | 0.194 | 0.0076 | 0.026 | 0.0068 | 0.06 | 0.33 | 0.10 | 3.5 | 69 |
| Example 7 | 0.07 | 3.5 | 0.05 | 0.005 | 0.027 | 0.0054 | 0.07 | 0.39 | 0.11 | 3.9 | 88 |
| Example 8 | 0.06 | 2.9 | 0.2 | 0.0053 | 0.028 | 0.0082 | 0.05 | 0.39 | 0.13 | 3.3 | 111 |
| Example 9 | 0.05 | 3.4 | 0.05 | 0.01 | 0.03 | 0.0073 | 0.02 | 0.19 | 0.06 | 3.6 | 24 |
| Comparative Example 1 | 0.08 | **2.8** | 0.068 | 0.0055 | 0.026 | 0.0082 | 0.08 | 0.06 | **0.02** | **2.9** | **23** |
| Comparative Example 2 | 0.08 | 3.5 | 0.178 | 0.0078 | 0.032 | 0.0014 | 0.04 | 0.98 | **0.28** | **4.5** | **148** |
| Comparative Example 3 | 0.06 | 3.4 | 0.082 | 0.0086 | 0.035 | 0.01 | 0.05 | 0.34 | 0.10 | 3.7 | 49 |

(continued)

| No. | Chemical element | | | | | | | | | | |
|---|---|---|---|---|---|---|---|---|---|---|---|
| | C | Si | Mn | S | Als | N | Sn | Cu | Cu/Si | Si+Cu | (Mn+Cu)/S |
| Comparative Example 4 | 0.06 | 3.5 | 0.149 | 0.0062 | 0.019 | 0.0018 | 0.09 | 0.22 | 0.06 | 3.7 | 60 |
| Comparative Example 5 | 0.06 | 3.5 | 0.149 | 0.0062 | 0.019 | 0.0018 | 0.09 | 0.22 | 0.06 | 3.7 | 60 |
| Comparative Example 6 | 0.05 | 3.1 | 0.065 | 0.0057 | 0.024 | 0.0035 | 0.02 | 0.27 | 0.09 | 3.4 | 59 |
| Comparative Example 7 | 0.05 | 3.1 | 0.065 | 0.0057 | 0.024 | 0.0035 | 0.02 | 0.27 | 0.09 | 3.4 | 59 |
| Comparative Example 8 | 0.06 | 3.5 | 0.149 | 0.0062 | 0.019 | 0.0018 | 0.09 | 0.22 | 0.06 | 3.7 | 60 |
| Comparative Example 9 | 0.06 | 3.5 | 0.149 | 0.0062 | 0.019 | 0.0018 | 0.09 | 0.22 | 0.06 | 3.7 | 60 |

The copper-containing oriented silicon steels of Examples 1-9 according to the present disclosure were prepared by the following steps.

(1) Performing smelting and casting according to the chemical composition shown in Table 1.

(2) Hot rolling: controlling the heating temperature to be 1050-1150 °C, performing rolling, and controlling the thickness of a hot-rolled plate to be 1.5-2.9 mm.

(3) Two-stage normalizing annealing: performing first-stage annealing at a temperature of 1100-1150 °C and holding for 60-120 s, performing second-stage annealing at a temperature of 900-950 °C and holding for 60-120 s, and then performing water cooling, wherein the cooling speed was controlled to be greater than or equal to 30 °C/s, so that the volume ratio of the combined amount of AlN, CuS and MnS precipitates having a size of 30-100 nm to the total amount of precipitates in the steel plate after normalizing annealing is 30-80%.

(4) Cold rolling: controlling the cold rolling reduction rate to be 88-92%.

(5) Decarburization annealing: controlling the decarburization temperature to be $T=804.5+56.5\times A+6.2\times B$, wherein A represents the volume ratio of the combined amount of AlN, CuS and MnS precipitates of 30-100 nm to the total amount of precipitates after normalizing, and B represents the cold rolling reduction rate.

(6) Nitriding: controlling the nitrogen content of the steel plate after nitriding to be 200-300 ppm.

(7) Applying a high temperature isolation agent, wherein MgO was used as the high temperature isolation agent.

(8) High-temperature annealing: the temperature was first raised to 500-700 °C and held for greater than or equal to 20 h; then the temperature was continuously raised to 700-1050 °C in an annealing atmosphere of a dry $N_2+H_2$ mixed gas with a volume percentage of 50% or more; then the temperature was continuously raised to 1050-1150 °C in an annealing atmosphere of a dry $N_2+H_2$ mixed gas with a volume percentage of less than 50%; finally, the temperature was continuously raised to 1150-1200 °C in an annealing atmosphere of pure $H_2$.

(9) Applying an insulating coating, and hot flattening annealing, wherein the insulating coating consists of phosphate, silicon dioxide and chromic anhydride.

The copper-containing oriented silicon steels of Examples 1-9 according to the present disclosure were prepared by the method including the above steps, and their chemical composition and related process parameters meet the control requirements of the designed specifications of the present disclosure.

The comparative steels of Comparative Examples 1-9 were prepared by the same method as that of Example 1 of the present disclosure, except that at least one of their chemical composition and/or process parameters does not meet the requirements of the present disclosure.

Table 2-1 and Table 2-2 list the specific process parameters of the copper-containing oriented silicon steels of Examples 1-9 and the oriented silicon steels of Comparative Examples 1-9 in the flow of steps of the above manufacturing method.

Table 2-1

| No. | Step (2) | | Step (3) | | | | | Step (4) |
|---|---|---|---|---|---|---|---|---|
| | Heating temperature (°C) | Thickness of hot-rolled plate (mm) | First-stage annealing temperature (°C) | First-stage holding time (s) | Second-stage annealing temperature (°C) | Second-stage holding time (s) | Cooling speed (°C/s) | Cold rolling reduction rate (%) |
| Example 1 | 1140 | 1.8 | 1146 | 77 | 947 | 78 | 33 | 88.9 |
| Example 2 | 1130 | 2.1 | 1112 | 116 | 939 | 68 | 35 | 90.5 |
| Example 3 | 1090 | 2.2 | 1143 | 64 | 931 | 68 | 32 | 89.5 |
| Example 4 | 1100 | 2.1 | 1120 | 72 | 919 | 91 | 33 | 90.5 |
| Example 5 | 1120 | 1.9 | 1150 | 118 | 940 | 62 | 35 | 90.5 |
| Example 6 | 1110 | 2.2 | 1106 | 98 | 947 | 106 | 36 | 89.5 |
| Example 7 | 1120 | 1.9 | 1134 | 78 | 923 | 74 | 32 | 90.5 |
| Example 8 | 1120 | 2.1 | 1144 | 104 | 937 | 84 | 36 | 90.5 |
| Example 9 | 1120 | 2.3 | 1116 | 95 | 902 | 70 | 35 | 90 |
| Comparative Example 1 | 1140 | 2.2 | 1125 | 91 | 936 | 91 | **25** | 90.9 |
| Comparative Example 2 | 1140 | 2.5 | 1108 | 112 | 941 | 65 | 36 | 92.0 |
| Comparative Example 3 | 1130 | 2.5 | 1106 | 65 | 922 | 76 | **20** | 90.8 |
| Comparative Example 4 | 1090 | **3.1** | 1133 | 97 | 942 | 102 | 35 | **92.6** |
| Comparative Example 5 | 1090 | 1.6 | 1126 | 99 | 921 | 83 | 35 | **85.6** |
| Comparative Example 6 | 1100 | 1.8 | 1100 | 61 | 900 | 75 | 35 | 88.9 |
| Comparative Example 7 | 1100 | 1.7 | 1149 | 97 | 936 | 113 | 36 | 88.2 |
| Comparative Example 8 | 1120 | 2.2 | 1110 | 110 | 909 | 87 | 36 | 91.8 |
| Comparative Example 9 | 1120 | 1.8 | 1103 | 61 | 949 | 102 | 35 | 90.0 |

Table 2-2

| No. | Step (5) Decarburization temperature T (°C) | Step (6) Nitrogen content of steel plate after nitriding (ppm) | Step (8) | | | | | | | thickness of finished product (mm) |
|---|---|---|---|---|---|---|---|---|---|---|
| | | | Temperature of first-stage temperature raising (°C) | Holding time (h) | Temperature of second-stage temperature raising (°C) | Annealing atmosphere of second-stage | Temperature of third-stage temperature raising (°C) | Annealing atmosphere of third-stage | Temperature of fourth-stage temperature raising (°C) | |
| Example 1 | 833 | 213 | 643 | 24 | 874 | 69% $N_2$+$H_2$ | 1080 | 46% $N_2$+$H_2$ | 1199 | 0.2 |
| Example 2 | 839 | 290 | 568 | 26 | 733 | 85% $N_2$+$H_2$ | 1093 | 14% $N_2$+$H_2$ | 1193 | 0.2 |
| Example 3 | 830 | 231 | 613 | 20 | 745 | 60% $N_2$+$H_2$ | 1060 | 12% $N_2$+$H_2$ | 1157 | 0.23 |
| Example 4 | 830 | 226 | 590 | 27 | 876 | 59% $N_2$+$H_2$ | 1051 | 7% $N_2$+$H_2$ | 1170 | 0.2 |
| Example 5 | 840 | 224 | 616 | 24 | 885 | 54% $N_2$+$H_2$ | 1076 | 15% $N_2$+$H_2$ | 1161 | 0.18 |
| Example 6 | 852 | 256 | 546 | 22 | 1033 | 84% $N_2$+$H_2$ | 1111 | 12% $N_2$+$H_2$ | 1190 | 0.23 |
| Example 7 | 829 | 210 | 508 | 24 | 945 | 93% $N_2$+$H_2$ | 1071 | 10% $N_2$+$H_2$ | 1171 | 0.18 |
| Example 8 | 845 | 233 | 686 | 21 | 966 | 69% $N_2$+$H_2$ | 1120 | 20% $N_2$+$H_2$ | 1163 | 0.2 |
| Example 9 | 840 | 225 | 689 | 24 | 954 | 84% $N_2$+$H_2$ | 1139 | 11% $N_2$+$H_2$ | 1162 | 0.23 |
| Comparative Example 1 | 823 | 223 | 520 | 30 | 922 | 59% $N_2$+$H_2$ | 1104 | 31% $N_2$+$H_2$ | 1198 | 0.2 |
| Comparative Example 2 | 845 | 280 | 589 | 25 | 1008 | 62% $N_2$+$H_2$ | 1059 | 9% $N_2$+$H_2$ | 1188 | 0.2 |
| Comparative Example 3 | 821 | 295 | 659 | 22 | 803 | 99% $N_2$+$H_2$ | 1076 | 35% $N_2$+$H_2$ | 1198 | 0.23 |
| Comparative Example 4 | 836 | 231 | 684 | 26 | 1009 | 80% $N_2$+$H_2$ | 1053 | 5% $N_2$+$H_2$ | 1156 | 0.23 |
| Comparative Example 5 | 843 | 272 | 544 | 28 | 1018 | 86% $N_2$+$H_2$ | 1143 | 47% $N_2$+$H_2$ | 1150 | 0.23 |
| Comparative Example 6 | **812** | 213 | 561 | 30 | 967 | 65% $N_2$+$H_2$ | 1146 | 30% $N_2$+$H_2$ | 1190 | 0.2 |
| Comparative Example 7 | **864** | 252 | 538 | 29 | 1041 | 78% $N_2$+$H_2$ | 1063 | 6% $N_2$+$H_2$ | 1151 | 0.2 |

EP 4 438 759 B1

| No. | Step (5) | Step (6) | Step (8) | | | | | | | | thickness of finished product (mm) |
|---|---|---|---|---|---|---|---|---|---|---|---|
| | Decarburization temperature T (°C) | Nitrogen content of steel plate after nitriding (ppm) | Temperature of first-stage temperature raising (°C) | Holding time (h) | Temperature of second-stage temperature raising (°C) | Annealing atmosphere of second-stage | Temperature of third-stage temperature raising (°C) | Annealing atmosphere of third-stage | Temperature of fourth-stage temperature raising (°C) | | |
| Comparative Example 8 | 848 | **170** | 515 | 30 | 835 | 66% $N_2$+$H_2$ | 1065 | 45% $N_2$+$H_2$ | 1182 | | 0.18 |
| Comparative Example 9 | 836 | **356** | 634 | 21 | 793 | 86% $N_2$+$H_2$ | 1064 | 37% $N_2$+$H_2$ | 1193 | | 0.18 |

It should be noted that after the two-stage normalizing annealing in above step (3) was completed in Examples 1-9 and Comparative Examples 1-9 according to the process parameters shown in Table 2, the steel plates after normalizing annealing in Examples and Comparative Examples were sampled, and observed and analyzed. The operations are specifically as follows.

1) The steel plate sampling size was 15 mm*15 mm, and precipitates in the normalized plate were extracted using a carbon film extraction replica technique, which includes: performing electrolytic corrosion in an electrolytic system of 89% methanol + 10% acetylacetonate + 1% tetramethylammonium chloride in a constant current mode with a current of 0.5 mA; washing the sample with absolute ethanol after electrolytic corrosion was completed, and then blow-drying the washed sample; spraying the treated samples with carbon using a vacuum spraying instrument; connecting the sample after carbon spraying to an electrode, and performing electrolysis using 7% perchlorate ethanol at a voltage of 12 V; after the carbon film falls from the sample, dipping the carbon film into 1% hydrochloric acid in ethanol, then into absolute ethanol, and finally into deionized water, lifting the carbon film out using a nickel mesh and put the carbon film on filter paper to dry for later use.

2) A transmission electron microscope (model: JEM2100, Japan Electron Optics Laboratory Co., Ltd. (JEOL)) and its supporting energy dispersive spectrometer (model: IE250, Oxford Instruments plc, UK) were used to observe the composition and size of precipitates in the normalized plate. It was found that AlN, CuS, and MnS precipitates exist in all steel plates of the examples and comparative examples. For each sample, 200 fields of view were continuously captured at a magnification of 30,000 times. The Image-Pro Plus image analysis software was used to count the number and size of precipitates in the captured fields of view. The volume ratio of the combined amount of AlN, CuS and MnS precipitates having a size of 30-100 nm to the total amount of precipitates was calculated. All the examples were calculated according to the following method:

$$\text{Volume ratio of the combined amount of AlN, CuS and MnS precipitates having a size of 30-100 nm to the total amount of precipitates} = \frac{N_{30\text{-}100} \times D_{30\text{-}100}^2}{N_{<30} \times D_{<30}^2 + N_{30\text{-}100} \times D_{30\text{-}100}^2 + N_{>100} \times D_{>100}^2}$$

where $N_{30\text{-}100}$ represents the number of AlN, CuS and MnS precipitates having a size of 30-100 nm;
$D_{30\text{-}100}$ represents the average size of AlN, CuS and MnS precipitates having a size of 30-100 nm;
$N_{<30}$ represents the number of AlN, CuS and MnS precipitates having a size of less than 30 nm;
$D_{<30}$ represents the average size of AlN, CuS and MnS precipitates having a size of less than 30 nm;
$N_{>100}$ represents the number of AlN, CuS and MnS precipitates having a size of greater than 100 nm;
$D_{>100}$ represents the average size of AlN, CuS and MnS precipitates having a size of greater than 100 nm.

The calculation results are listed in Table 3 below.
Table 3 lists the observation and analysis results of the steel plates after normalizing annealing in the examples and comparative examples.

Table 3

| No. | Volume ratio of the combined amount of AlN, CuS and MnS precipitates having a size of 30-100 nm to the total amount of precipitates in the steel plate after normalizing annealing |
|---|---|
| Example 1 | 40% |
| Example 2 | 52% |
| Example 3 | 35% |
| Example 4 | 36% |
| Example 5 | 53% |
| Example 6 | 74% |
| Example 7 | 34% |
| Example 8 | 62% |
| Example 9 | 53% |

(continued)

| No. | Volume ratio of the combined amount of AlN, CuS and MnS precipitates having a size of 30-100 nm to the total amount of precipitates in the steel plate after normalizing annealing |
|---|---|
| Comparative Example 1 | 23% |
| Comparative Example 2 | 61% |
| Comparative Example 3 | **20%** |
| Comparative Example 4 | 46% |
| Comparative Example 5 | 58% |
| Comparative Example 6 | 46% |
| Comparative Example 7 | 61% |
| Comparative Example 8 | 67% |
| Comparative Example 9 | 45% |

The copper-containing oriented silicon steels of Examples 1 to 9 and the oriented silicon steels of Comparative Examples 1 to 9 were separately sampled and subjected to measurements of magnetic induction $B_8$, iron loss $P_{17/50}$ and average grain size and average grain size deviation of secondary recrystallisation. The obtained test results are listed in Table 4 below.

The above relevant properties were determined by the following methods.

Magnetic induction $B_8$ and iron loss $P_{17/50}$: the magnetic induction $B_8$ and iron loss $P_{17/50}$ of the examples and comparative examples were measured according to GB/T13789.

Average grain size and average grain size deviation of secondary recrystallisation: the average grain size and average grain size deviation of secondary recrystallisation of the examples and comparative examples were measured by intercept method in accordance with GB/T 6394-2017 *Determination of average grain size of metal.*

Table 4 lists the test results of the properties of the copper-containing oriented silicon steels of Examples 1-9 and the oriented silicon steels of Comparative Examples 1-9.

Table 4

| No. | Iron loss $P_{17/50}$ (W/kg) | Magnetic induction $B_8$ (T) | Average grain size of secondary recrystallisation (mm) | Average grain size deviation of secondary recrystallisation (mm) |
|---|---|---|---|---|
| Example 1 | 0.83 | 1.91 | 13 | 1.4 |
| Example 2 | 0.79 | 1.93 | 12 | 1.7 |
| Example 3 | 0.76 | 1.92 | 16 | 2.2 |
| Example 4 | 0.78 | 1.93 | 13 | 4 |
| Example 5 | 0.75 | 1.94 | 10 | 2.3 |
| Example 6 | 0.78 | 1.92 | 14 | 3.9 |
| Example 7 | 0.76 | 1.92 | 11 | 3.2 |
| Example 8 | 0.78 | 1.92 | 13 | 2.8 |
| Example 9 | 0.77 | 1.91 | 12 | 1.2 |
| Comparative Example 1 | **0.86** | **1.88** | **23** | **6** |
| Comparative Example 2 | **0.93** | **1.89** | **24** | **6** |
| Comparative Example 3 | **0.97** | **1.89** | **26** | **7** |
| Comparative Example 4 | **0.99** | **1.84** | No secondary recrystallisation occurred | - |
| Comparative Example 5 | **0.94** | **1.87** | Incomplete secondary recrystallisation | - |

(continued)

| No. | Iron loss $P_{17/50}$ (W/kg) | Magnetic induction $B_8$ (T) | Average grain size of secondary recrystallisation (mm) | Average grain size deviation of secondary recrystallisation (mm) |
|---|---|---|---|---|
| Comparative Example 6 | **1** | **1.87** | Incomplete secondary recrystallisation | - |
| Comparative Example 7 | **1.2** | **1.82** | No secondary recrystallisation occurred | - |
| Comparative Example 8 | **1.4** | **1.82** | No secondary recrystallisation occurred | - |
| Comparative Example 9 | **1.1** | **1.86** | No secondary recrystallisation occurred | - |

As shown in Table 4, compared with Comparative Examples 1-9, the copper-containing oriented silicon steels of Examples 1-9 have a lower iron loss $P_{17/50}$ and a higher magnetic induction $B_8$, with the iron loss $P_{17/50}$ between 0.75 and 0.83 and the magnetic induction $B_8$ between 1.91 and 1.94, thus having better magnetic properties. Meanwhile, the copper-containing oriented silicon steels of Examples 1-9 have an average grain size of secondary recrystallisation of 10-16 mm, and an average grain size deviation of 1.2 mm to 4 mm.

As can be seen in combination with the above Table 1 to Table 4, in the oriented silicon steels of Comparative Examples 1-9, the content of Cu in Comparative Examples 1-2 is beyond the designed range of the present disclosure, thus their magnetic properties are poor; while the copper-containing oriented silicon steels of Examples 1-9 meet the designed requirements of the present disclosure have significantly better magnetic properties.

Although the designed chemical element composition of Comparative Example 3 is completely the same as that of Example 2, Comparative Example 3 does not adopt the technological parameters of two-stage normalizing annealing treatment meeting the requirements of the present disclosure, so the volume ratio of the combined amount of AlN, CuS and MnS precipitates having a size of 30-100 nm to the total amount of precipitates in the steel plate after normalizing annealing exceeds the designed range of the present disclosure, so the magnetic properties of the oriented silicon steel finally obtained in Comparative Example 3 are poor.

Although the designed chemical element compositions of Comparative Examples 4 and 5 are completely the same as that of Example 3, the cold rolling reduction rate during the cold rolling stage of step (4) in Comparative Examples 4 and 5 is beyond the designed range of the present disclosure, which leads to poor magnetic properties of the oriented silicon steel finally obtained in Comparative Examples 4 and 5.

Although the designed chemical element compositions of Comparative Examples 6 and 7 are completely the same as that of Example 4, the decarburization temperature during decarburization annealing stage of step (5) in Comparative Examples 6 and 7 does not meet the designed requirements of the present disclosure, which leads to poor magnetic properties of the oriented silicon steel finally obtained in Comparative Examples 6 and 7.

Although the designed chemical element compositions of Comparative Examples 8 and 9 are completely the same as that of Example 5, the nitrogen content of the steel plates after nitriding in step (5) in Comparative Examples 8 and 9 is beyond the designed range of the present disclosure, which leads to poor magnetic properties of the oriented silicon steel finally obtained in Comparative Examples 8 and 9.

In conclusion, compared with Comparative Examples 1-9, Examples 1-9 having the designed chemical element composition and adopting the manufacturing process of the present disclosure obtain copper-containing oriented silicon steel products having better magnetic properties, of which the iron losses $P_{17/50}$ are all less than 0.85 W/Kg, and the magnetic inductions $B_8$ are all greater than 1.90 T, thus the obtained copper-containing oriented silicon steel products have good popularization prospects and application values.

## Claims

1. A copper-containing oriented silicon steel, wherein the copper-containing oriented silicon steel comprises the following chemical elements in percentage by mass:

   0.04-0.09% of C, 2.9-4.0% of Si, 0.05-0.2% of Mn, 0.005-0.01% of S, 0.015-0.035% of Als, 0.0010-0.01% of N, 0.01-0.1% of Sn, and Cu, the balance being Fe and other inevitable impurities; wherein the content of Cu satisfies: $3\% \leq Si+Cu \leq 4.4\%$, $0.05 \leq Cu/Si \leq 0.13$ and $24 \leq (Mn+Cu)/S \leq 118$;
   wherein the copper-containing oriented silicon steel has an average grain size of secondary recrystallisation of 10-20 mm, and an average grain size deviation of less than 5 mm, wherein the average grain size and average grain size deviation of secondary recrystallisation are measured according to GB/T 6394-2017 as defined in the description.

2. The copper-containing oriented silicon steel according to claim 1, wherein the content of Si is preferably 3.1-3.5%; the content of Mn is preferably 0.065-0.15%; the content of Sn is preferably 0.05-0.1%; the content of Cu is preferably 0.19-0.44%, more preferably 0.27-0.44%; the content of Cu preferably satisfies: $3.3\% \leq Si+Cu \leq 4.1\%$ and/or $24 \leq (Mn+Cu)/S \leq 111$.

3. The copper-containing oriented silicon steel according to any one of claims 1 or 2, wherein the copper-containing oriented silicon steel has a thickness of less than or equal to 0.23 mm.

4. The copper-containing oriented silicon steel according to any one of claims 1 to 3, wherein the copper-containing oriented silicon steel has an average grain size of secondary recrystallisation of 12-16 mm, and an average grain size deviation of 4 mm or less.

5. The copper-containing oriented silicon steel according to any one of claims 1 to 4, wherein the copper-containing oriented silicon steel has an iron loss $P_{17/50}$ of less than 0.85 W/Kg, more preferably 0.78 W/Kg or less, and a magnetic induction $B_8$ of greater than 1.90 T, wherein the magnetic induction $B_8$ and iron loss $P_{17/30}$ are measured according to GB/T13789 as defined in the description.

6. A method for manufacturing the copper-containing oriented silicon steel according to any one of claims 1 to 5, including the steps of:

   (1) smelting and casting molten steel to prepare a slab;
   (2) subjecting the slab to hot rolling to prepare a hot-rolled steel plate;
   (3) subjecting the steel plate to a two-stage normalizing annealing, wherein a first-stage annealing is performed at a temperature of 1100-1150 °C for 60-120 s, and a second-stage annealing is performed at a temperature of 900-950 °C for 60-120 s, and then water cooling, wherein a cooling speed is greater than or equal to 30 °C/s, so that a volume ratio of the combined amount of AlN, CuS and MnS precipitates having a size of 30-100 nm to the total amount of precipitates in the steel plate after normalizing annealing is 30-80%;
   (4) cold rolling;
   (5) decarburization annealing;
   (6) nitriding;
   (7) applying a high temperature isolation agent;
   (8) high-temperature annealing; and
   (9) applying an insulating coating, and hot flattening annealing.

7. The method according to claim 6, wherein in step (2), preferably, heating temperature is 1050-1150 °C and/or the hot-rolled steel plate has a thickness of 1.5-2.9 mm; in step (4), preferably, cold rolling reduction rate is 88-92%; and/or in step (6) preferably, the steel plate has a nitrogen content of 200-300 ppm after nitriding.

8. The method according to claim 6 or 7, wherein in step (5), decarburization annealing temperature $T=804.5+56.5 \times A+6.2 \times B$, wherein A represents the volume ratio of the combined amount of AlN, CuS and MnS precipitates having a size of 30-100 nm to the total amount of precipitates in the steel plate after normalizing annealing, and B represents the cold rolling reduction rate.

9. The method according to any one of claims 6 to 8, wherein in step (8), the temperature is first raised to 500-700 °C and held for preferably greater than or equal to 20 h; then the temperature is continuously raised to 700-1050 °C in an annealing atmosphere of a dry $N_2+H_2$ mixed gas with a volume percentage of 50% or more; then the temperature is continuously raised to 1050-1150 °C in an annealing atmosphere of a dry $N_2+H_2$ mixed gas with a volume percentage of less than 50%; finally, the temperature is continuously raised to 1150-1200 °C in an annealing atmosphere of pure $H_2$.

**Patentansprüche**

1. Ein kupferhaltiger orientierter Siliziumstahl, wobei der kupferhaltige orientierte Siliziumstahl die folgenden chemischen Elemente in Massenprozent enthält:

0,04-0,09 % C, 2,9-4,0 % Si, 0,05-0,2 % Mn, 0,005-0,01 % S, 0,015-0,035 % Al, 0,0010-0,01 % N, 0,01-0,1 % Sn und Cu, wobei der Rest aus Fe und anderen unvermeidbaren Verunreinigungen besteht; wobei der Cu-Gehalt folgende Bedingungen erfüllt: 3 % ≤ Si + Cu ≤ 4,4 %, 0,05 ≤ Cu/Si ≤ 0,13 und 24 ≤ (Mn + Cu)/S ≤ 118; wobei der kupferhaltige orientierte Siliziumstahl eine durchschnittliche Korngröße der sekundären Rekristallisation von 10-20 mm und eine durchschnittliche Korngrößenabweichung von weniger als 5 mm aufweist, wobei die durchschnittliche Korngröße und die durchschnittliche Korngrößenabweichung der sekundären Rekristallisation gemäß GB/T 6394-2017, wie in der Beschreibung definiert, gemessen werden.

2. Der kupferhaltige orientierte Siliziumstahl gemäß Anspruch 1, wobei der Gehalt an Si vorzugsweise 3,1-3,5 % beträgt; der Gehalt an Mn vorzugsweise 0,065-0,15 % beträgt; der Gehalt an Sn vorzugsweise 0,05-0,1 % beträgt; der Gehalt an Cu vorzugsweise 0,19-0,44 %, noch bevorzugter 0,27-0,44 % beträgt; der Gehalt an Cu vorzugsweise folgende Bedingungen erfüllt: 3,3 % ≤ Si + Cu ≤ 4,1 % und/oder 24 ≤ (Mn + Cu)/S ≤ 111.

3. Der kupferhaltige orientierte Siliziumstahl gemäß einem der Ansprüche 1 oder 2, wobei der kupferhaltige orientierte Siliziumstahl eine Dicke von weniger als oder gleich 0,23 mm aufweist.

4. Der kupferhaltige orientierte Siliziumstahl gemäß einem der Ansprüche 1 bis 3, wobei der kupferhaltige orientierte Siliziumstahl eine durchschnittliche Korngröße der sekundären Rekristallisation von 12 bis 16 mm und eine durchschnittliche Korngrößenabweichung von 4 mm oder weniger aufweist.

5. Der kupferhaltige orientierte Siliziumstahl gemäß einem der Ansprüche 1 bis 4, wobei der kupferhaltige orientierte Siliziumstahl einen Eisenverlust $P_{17/50}$ von weniger als 0,85 W/kg, vorzugsweise 0,78 W/kg oder weniger, und eine magnetische Induktion $B_8$ von mehr als 1,90 T aufweist, wobei die magnetische Induktion $B_8$ und der Eisenverlust $P_{17/50}$ gemäß GB/T13789, wie in der Beschreibung definiert, gemessen werden.

6. Ein Verfahren zur Herstellung des kupferhaltigen orientierten Siliziumstahls nach einem der Ansprüche 1 bis 5, umfassend die folgenden Schritte:

(1) Schmelzen und Gießen von geschmolzenem Stahl zur Herstellung einer Bramme;
(2) Warmwalzen der Bramme zur Herstellung einer warmgewalzten Stahlplatte;
(3) Durchführen einer zweistufigen Normalisierungsglühung der Stahlplatte, wobei eine erste Glühstufe bei einer Temperatur von 1100 bis 1150 °C für 60 bis 120 s und eine zweite Glühstufe bei einer Temperatur von 900 bis 950 °C für 60 bis 120 s durchgeführt wird, und anschließendes Wasserkühlen, wobei die Kühlgeschwindigkeit größer oder gleich 30 °C/s ist, so dass das Volumenverhältnis der Gesamtmenge an AlN-, CuS- und MnS-Ausscheidungen mit einer Größe von 30 bis 100 nm zur Gesamtmenge an Ausscheidungen in der Stahlplatte nach dem Normalisierungsglühen 30 bis 80 % beträgt;
(4) Kaltwalzen;
(5) Entkohlungsglühen;
(6) Nitrieren;
(7) Aufbringen eines Hochtemperatur-Isoliermittels;
(8) Hochtemperaturglühen; und
(9) Aufbringen einer isolierenden Beschichtung und Heißglätten.

7. Das Verfahren gemäß Anspruch 6, wobei in Schritt (2) vorzugsweise die Erwärmungstemperatur 1050-1150 °C beträgt und/oder die warmgewalzte Stahlplatte eine Dicke von 1,5-2,9 mm aufweist; in Schritt (4) vorzugsweise die Kaltwalzreduktionsrate 88 bis 92 % beträgt; und/oder in Schritt (6) vorzugsweise die Stahlplatte nach dem Nitrieren einen Stickstoffgehalt von 200 bis 300 ppm aufweist.

8. Das Verfahren gemäß Anspruch 6 oder 7, wobei in Schritt (5) die Entkohlungsglühtemperatur $T=804,5+56,5 \times A+6,2 \times B$ ist, wobei A das Volumenverhältnis der kombinierten Menge von AlN-, CuS- und MnS-Ausscheidungen mit einer Größe von 30 bis 100 nm zur Gesamtmenge der Ausscheidungen in der Stahlplatte nach dem Normalisierungsglühen darstellt und B den Kaltwalzreduktionsgrad darstellt.

9. Das Verfahren gemäß einem der Ansprüche 6 bis 8, wobei in Schritt (8) die Temperatur zunächst auf 500 bis 700 °C erhöht und vorzugsweise für mindestens 20 Stunden gehalten wird; dann wird die Temperatur kontinuierlich auf 700 bis 1050 °C in einer Glühatmosphäre aus einem trockenen $N_2$ +$H_2$ -Gemischgas mit einem Volumenanteil von 50 % oder mehr erhöht; dann wird die Temperatur kontinuierlich auf 1050 bis 1150 °C in einer Glühatmosphäre aus einem trockenen $N_2$ +$H_2$ -Mischgas mit einem Volumenanteil von weniger als 50 % erhöht; schließlich wird die Temperatur in einer Glühatmosphäre aus reinem $H_2$ kontinuierlich auf 1150-1200 °C erhöht.

**Revendications**

1. Acier au silicium orienté contenant du cuivre, dans lequel l'acier au silicium orienté contenant du cuivre comprend les éléments chimiques suivants en pourcentage en masse :

   0,04 à 0,09 % de C, 2,9 à 4,0 % de Si, 0,05 à 0,2 % de Mn, 0,005 à 0,01 % de S, 0,015 à 0,035 % de Als, 0,0010 à 0,01 % de N, 0,01 à 0,1 % de Sn, et Cu, le reste étant Fe et d'autres impuretés inévitables ; dans lequel la teneur en Cu satisfait : 3 % ≤ Si+Cu ≤ 4,4 %, 0,05 ≤ Cu/Si ≤ 0,13 et 24 ≤ (Mn+Cu)/S ≤ 118 ;
   dans lequel l'acier au silicium orienté contenant du cuivre possède une granulométrie moyenne de recristallisation secondaire de 10 à 20 mm, et un écart de granulométrie moyenne de moins de 5 mm, dans lequel la granulométrie moyenne et l'écart de granulométrie moyenne de recristallisation secondaire sont mesurés selon la norme GB/T 6394-2017 comme défini dans la description.

2. Acier au silicium orienté contenant du cuivre selon la revendication 1, dans lequel la teneur en Si est de préférence de 3,1 à 3,5 % ; la teneur en Mn est de préférence de 0,065 à 0,15 % ; la teneur en Sn est de préférence de 0,05 à 0,1 % ; la teneur en Cu est de préférence de 0,19 à 0,44 %, plus préférentiellement de 0,27 à 0,44 % ; la teneur en Cu satisfait de préférence : 3,3 % ≤ Si+Cu ≤ 4,1 % et/ou 24 ≤ (Mn+Cu)/S ≤ 111.

3. Acier au silicium orienté contenant du cuivre selon l'une des revendications 1 ou 2, dans lequel l'acier au silicium orienté contenant du cuivre possède une épaisseur inférieure ou égale à 0,23 mm.

4. Acier au silicium orienté contenant du cuivre selon l'une des revendications 1 à 3, dans lequel l'acier au silicium orienté contenant du cuivre possède une granulométrie moyenne de recristallisation secondaire de 12 à 16 mm, et un écart de granulométrie moyenne de 4 mm ou moins.

5. Acier au silicium orienté contenant du cuivre selon l'une des revendications 1 à 4, dans lequel l'acier au silicium orienté contenant du cuivre possède une perte dans le noyau $P_{17/30}$ de moins de 0,85 W/Kg, plus préférentiellement de 0,78 W/Kg ou moins, et une induction magnétique $B_8$ de plus de 1,90 T, dans lequel l'induction magnétique $B_8$ et la perte dans le noyau $P_{17/50}$ sont mesurées selon la norme GB/T13789 comme défini dans la description.

6. Procédé de fabrication de l'acier au silicium orienté contenant du cuivre selon l'une des revendications 1 à 5, incluant les étapes de :

   (1) fusion et coulée d'acier en fusion pour préparer une brame ;
   (2) soumission de la brame à un laminage à chaud pour préparer une plaque d'acier laminée à chaud ;
   (3) soumission de la plaque d'acier à un recuit de normalisation en deux étapes, dans lequel un recuit de première étape est réalisé à une température de 1100 à 1150 °C pendant 60 à 120 s, et un recuit de seconde étape est réalisé à une température de 900 à 950 °C pendant 60 à 120 s, et ensuite, refroidissement à l'eau, dans lequel une vitesse de refroidissement est supérieure ou égale à 30 °C/s, de telle sorte qu'un rapport volumique de la quantité combinée de précipités d'AlN, de CuS et de MnS ayant une taille de 30 à 100 nm sur la quantité totale de précipités dans la plaque d'acier après recuit de normalisation soit de 30 à 80 % ;
   (4) laminage à froid ;
   (5) recuit de décarburation ;
   (6) nitruration ;
   (7) application d'un agent d'isolation à haute température ;
   (8) recuit à haute température ; et
   (9) application d'un revêtement isolant et recuit d'aplatissement à chaud.

7. Procédé selon la revendication 6, dans lequel à l'étape (2), de préférence, la température de chauffage est de 1050 à 1150 °C et/ou la plaque d'acier laminée à chaud possède une épaisseur de 1,5 à 2,9 mm ; à l'étape (4), de préférence, le taux de réduction de laminage à froid est de 88 à 92 % ; et/ou à l'étape (6), de préférence, la plaque d'acier possède une teneur en azote de 200 à 300 ppm après nitruration.

8. Procédé selon la revendication 6 ou 7, dans lequel à l'étape (5), la température de recuit de décarburation est T = 804,5 + 56,5 × A + 6,2 × B, où A représente le rapport volumique de la quantité combinée de précipités d'AlN, de CuS et de MnS ayant une taille de 30 à 100 nm sur la quantité totale de précipités dans la plaque d'acier après recuit de normalisation, et B représente le taux de réduction de laminage à froid.

9. Procédé selon l'une des revendications 6 à 8, dans lequel à l'étape (8), la température est d'abord augmentée jusqu'à 500 à 700 °C et maintenue pendant de préférence 20 h ou plus ; puis la température est augmentée en continu jusqu'à 700 à 1050 °C dans une atmosphère de recuit d'un gaz mélangé $N_2+H_2$ sec avec un pourcentage volumique de 50 % ou plus ; puis la température est augmentée en continu jusqu'à 1050 à 1150 °C dans une atmosphère de recuit d'un gaz mélangé $N_2+H_2$ sec avec un pourcentage volumique de moins de 50 % ; enfin, la température est augmentée en continu jusqu'à 1150 à 1200 °C dans une atmosphère de recuit de $H_2$ pur.

**REFERENCES CITED IN THE DESCRIPTION**

**Patent documents cited in the description**

- CN 103834908 A
- CN 110055393 A

- CN 112522609 A

**Non-patent literature cited in the description**

- Principles of Materials Science of Electrical Steel. Higher Education Press